Europäisches Patentamt

European Patent Office

Office européen des brevets

(11) Publication number: **0 202 353**
**B1**

(12) **EUROPEAN PATENT SPECIFICATION**

(45) Date of publication of patent specification: **14.12.88**

(21) Application number: **85106290.1**

(22) Date of filing: **22.05.85**

(51) Int. Cl.⁴: **B 01 D 53/34**

(54) Process for the removal of sulfur oxide from a gas.

(43) Date of publication of application:
**26.11.86 Bulletin 86/48**

(45) Publication of the grant of the patent:
**14.12.88 Bulletin 88/50**

(84) Designated Contracting States:
**AT BE DE FR GB IT NL SE**

(56) References cited:
**DE-A-2 412 603**
**US-A-4 071 436**
**US-A-4 091 076**
**US-A-4 233 276**

(73) Proprietor: **UOP Inc.**
**10 UOP Plaza Algonquin & Mt. Prospect Roads**
**Des Plaines Illinois 60016 (US)**

(72) Inventor: **Wang, Li**
**417 Morning Glory Circle**
**Westmont Illinois 60559 (US)**

(74) Representative: **Brock, Peter William**
**UOP Processes International Corporation 48**
**Leicester Square**
**London WC2H 7LW (GB)**

Courier Press, Leamington Spa, England.

# EP 0 202 353 B1

**Description**

The field of art to which the claimed invention pertains is the removal of sulfur oxide from a gas, particularly a flue gas.

Due to the ever increasing concern about air pollution, great efforts have been expended in recent years toward the development of processes to reduce the pollutants introduced into the atmosphere from various industrial operations. One of the most onerous of these pollutants is sulfur dioxide which is present in the stacks of flue gases from various operations. In one such operation, the fluidized catalytic cracking (FCC) process, sulfur compounds contained in the hydrocarbon feedstock result in sulfur containing material to be deposited on the FCC catalyst along with the carbonaceous material and thereby cause the generation of sulfur dioxide in the FCC regeneration section when the sulfur is burned off the catalyst along with the carbon deposits. This sulfur dioxide becomes a part of the regenerator flue gas and thus a pollutant when the flue gas eventually finds its way into the atmosphere.

There are many methods known to the art for removal of sulfur dioxide from stack or flue gases. There is, for example, the wet scrubbing process in which the sulfur dioxide reacts with an appropriate reactant contained in an aqueous solution or slurry sprayed into the flue gas, the sulfur thereby being removed from the system as a compound contained in the liquid phase. In another process the flue gas is passed through a fixed solid bed containing a sulfur "acceptor" with which the sulfur dioxide reacts and on which the sulfur is retained in the sulfate form, thereby being removed from the flue gas.

US—A—4071436 describes a process for the removal of sulfur oxides from an FCC regenerator flue gas. The flue gas is contacted, at a temperature of 1000 to 1500°F (537 to 815°C), with a solid which is preferably active alumina, which may in some embodiments be replaced by, or supplemented with magnesia. This leads to the formation of solid sulfur-containing materials which can be converted into hydrogen sulfide by contacting the solid with a hydrocarbon, preferably having at least 6 carbon atoms, at a temperature from 800 to 1300°F (426 to 704°C). It is indicated that materials that form stable sulfates at the sulfur oxide reaction conditions, and stable sulfides at the hydrogen sulfide formation conditions,·e.g. lithium, have no effect on the process, are preferably absent, but may be present. It is also suggested that the hydrocarbon used to separate the hydrogen sulfide can be replaced by hydrogen or carbon monoxide, but the results may not be equivalent, so the use of hydrocarbon is particularly preferred.

Other references having similar teachings to US—A—4071436, but not as relevant or no more relevant to the present invention are US—A—4153535, —4153534, —4204945, —4243556, —4252635, —4300997 and —4325811. The last mentioned reference also teaches the use of a reducing zone, separate from the reactor and regenerator, in which the sulfur laden acceptor is relieved of sulfur by reduction with hydrogen or a hydrocarbon gas.

The present invention is based on the discovery of an acceptor of a particular composition which has unique capabilities with regard to the disposition of sulfur oxides in a flue gas.

The problem solved according to the present invention involves providing a process which is not only capable of selectively removing sulfur oxide from a gas by means of an acceptor, but which also maximizes the proportion of the sulfur subsequently recovered from the acceptor by reduction with hydrogen which is in the form of hydrogen sulfide.

Accordingly, in one major embodiment, the present invention comprises a process for removing sulfur oxides from a gas stream by (a) contacting the gas stream with a solid acceptor comprising a mixture of magnesium and aluminium oxides; at a temperature from 540 to 760°C to react and retain sulfur oxides on the acceptor, and (b) subsequently removing the retained sulfur oxides from the acceptor by reduction.

According to the invention, the acceptor is a lithium doped mixture of magnesium and aluminium oxide, and the retained sulfur oxides are reduced by contacting the acceptor with hydrogen at a temperature of 730°C or above.

Other embodiments of the invention encompass details about acceptor composition, flow schemes and reaction conditions, all of which are hereinafter disclosed in the following discussion of each of the facets of the invention.

The surprising and unexpected discovery has been made that a lithium doped mixture of magnesium and aluminium oxides is not only an excellent acceptor, as far as removing sulfur oxide from a gas is concerned, but is also readily regenerable, i.e. the accepted surface oxide is easily removed by reduction with hydrogen. This is in contradistinction to the express teaching of aforementioned US—A—4071436 (column 13) that lithium, among other materials, is preferably not present in a particulate solid used for removing sulfur compounds from gases, since it simply forms a nonregenerable sulfur-containing solid. The equally surprising and just as important discovery has been made that when reduced with hydrogen, at a temperature of 730°C or above, the sulfur-containing acceptor of the process of the invention produces almost exclusively hydrogen sulfide gas, as opposed to the much less desirable free sulfur or sulfur dioxide as produced by the acceptors of known processes.

It is important to avoid the production of free sulfur or sulfur dioxide in the course of reducing or regenerating acceptors. Free sulfur would have the tendency to plug the process equipment, while the production of sulfur dioxide would, of course, defeat the purpose of the sulfur oxide removal from the gas. The high purity hydrogen sulfide obtained by the process of the present invention may be disposed of in many ways, including direct sale as a valuable industrial chemical.

2

The term "lithium doped" as used herein may be given a very broad construction, since it is not important exactly in what manner the lithium is incorporated with the mixture of magnesium and aluminium oxides. Thus, lithium doping may be accomplished by only known methods, e.g., by adding a lithium salt to an aqueous sol of magnesium and aluminium salts prior to forming the sol into a gel for extrusion or sphere formation, or magnesia and alumina mixture extrudates or spheres may be impregnated with an aqueous solution of a lithium salt, dried and calcined. The amount of lithium added by whatever method of preparation is used should preferably result in an acceptor containing 0.5 wt.% to 1.0 wt.% lithium on the basis of the free metal. The weight ratio of magnesium oxide to aluminum oxide in the acceptor is preferably from 0.15:1.0 to 0.25:1.0.

The process of the present invention is best employed in a dry particle scrubber. More particularly, the acceptor is preferably in the form of spheres or extrudates packed in a fixed bed contained in a contacting zone or scrubbing chamber, although a fluidized bed of small particles of acceptor would also be effective. The bed of acceptor may be divided into two or more portions, with each portion being in an isolated contacting zone. Each such isolated zone may then be cycled between the acceptance step of the invention where the sulfur oxides combined with the acceptor and the removal step of the invention where the sulfur oxides are removed from the acceptor by contact with hydrogen at reduction conditions. Such cycling may be accomplished by a system of valves and automatic controllers, the details of which would be familiar to those skilled in the art. The acceptance step conditions include a temperature from 540°C to 760°C, while the removal or reduction step conditions include a temperature of about 730°C or above.

The process of the present invention would be particularly useful for treating the flue gas from a fluid catalytic cracking unit (FCC) regenerator. It is not unusual for such flue gas to be high in sulfur oxide content due to the high sulfur content frequently found in low quality, high sulfur FCC feedstocks, the use of which is becoming increasingly common. Associating the process of the present invention with the FCC process would have the further advantage that a source of reducing hydrogen would be readily available since hydrogen is one of the FCC reaction products and could be supplied from the standard FCC gas concentration or treatment facilities in a quantity and purity quite adequqte for use in the process of the present invention. Unlike some of the aforementioned background processes the acceptor used by the present invention could not be mixed and circulated with the FCC catalyst because the lithium compounds would tend to migrate from the acceptor to the catalyst which would be deleterious to the performance of both.

The following nonlimiting examples are presented to illustrate the remarkable capability of the process of the present invention to not only achieve complete acceptance of $SO_2$ from a gas, but also to release the retained sulfur in the course of reduction with hydrogen in the desirable form of $H_2S$.

Example I

Various samples of aluminum and magnesium oxide mixtures were obtained, two doped with sodium and two doped with lithium. The latter two samples were prepared for use in the process of the present invention by adding lithium nitrate to a solution of aluminum and magnesium nitrates, gelling the solution by adding sufficient ammonium hydroxide to it to raise the pH to 8.5, filtering out the aluminum/magnesium co-gel, drying the gel at 150°C for 3 hours and calcining the gel at 595°C for 6 hours. This preparation was used for obtaining the small quantities of sample needed for the laboratory analysis. Commercial quantities of acceptor would be obtained by spray drying or oil dropping and aging the co-gel by methods known to the art.

Following is a summary of the compositions of the above acceptors and performance (averaged over five cycles), when used to remove sulfur dioxide from a typical flue gas at 730°C followed by reduction with hydrogen at 730°C.

| Acceptor designation | Composition | | | | | Reduction | | |
|---|---|---|---|---|---|---|---|---|
| | %Na | %Li | %Mg | %Al | % Acceptance | %H$_2$S | %SO$_2$ | %S$_x$ |
| A* | 2.1 | — | 19.8 | 33.8 | 100 | 76.3 | 1.0 | 22.7 |
| B* | 1.2 | — | 17.3 | 33.2 | 100 | 80.0 | 0 | 20.0 |
| C | — | 0.69 | 19.2 | 33.8 | 100 | 96.4 | 0 | 4.6 |
| D | — | 0.56 | 17.9 | 34.6 | 100 | 96.8 | 0 | 3.2 |

*For comparison

The remarkable effect of the process of the present invention is clearly apparent from the above data. The difference in the percent hydrogen sulfide produced during reduction between the sodium doped and lithium doped acceptor is testimony to the advantageous use of the present invention.

Data for the performance of above samples A and C over five cycles are as follows:

| Acceptors | %H₂S | | | | |
| --- | --- | --- | --- | --- | --- |
| | Cycle −1 | −2 | −3 | −4 | −5 |
| A* | 95.8 | 82.8 | 70.9 | 65.3 | 66.2 |
| C | 90.7 | 95.2 | 99.8 | 96.5 | 99.8 |

The last above data demonstrates that the advantageous effect of the present invention remains high and even improves over subsequent cycles in contradistinction to the process using the sodium doped acceptor. The high $H_2S$ selectively observed for cycle −1 of acceptor A was due to the low recovery of free sulfur from the acceptor during the reduction step of that cycle. The sulfur recovery in the first cycle is always low for sodium doped acceptors. Presumably part of the sodium sulfur tenaciously with such acceptors.

Example II (for comparison)

For the purpose of further comparison of the process of the present invention and a process known to the art, the same above test procedure was applied to an $Al_2O_3$ acceptor as dislcosed in US—A—4 071 436. The results obtained are as follows:

| Composition | % Acceptance | Reduction | | |
| --- | --- | --- | --- | --- |
| | | %H₂S | %SO₂ | %Sx |
| Al₂O₃ | 59.3 | 40.5 | 33.4 | 26.1 |

The low $H_2S$ selectivity and even low degree of acceptance of this $Al_2O_3$ acceptor is further evidence of the advantageous effect of the present invention.

Example III

Thermogravimetric analysis was conducted on $Al_2O_3$ and the $Li \cdot MgO \cdot Al_2O_3$ of the present invention to determine the maximum $SO_2$ uptake capacity of each, as one would prefer an acceptor with not only a high $SO_2$ acceptance efficiency (acceptance rate) but also a high capacity (total $SO_2$ adsorbed for saturation of the acceptor). The latter is of importance particularly in the present process, because a high capacity means a longer duration before the acceptor needs to be regenerated which also means the frequency of cycling between acceptance and reduction will be minimal.

The following results were obtained:

| | Net weight increase from SO₂ at 730°C (% of the initial sample weight) |
| --- | --- |
| Li · MgO · Al₂O₃ | 50% |
| Al₂O₃ | 3% |

The superiority of the acceptor of the present invention with regard to $SO_2$ uptake capacity is thus also demonstrated.

## Claims

1. A process for removing sulfur oxides from a gas by (a) contacting the gas with a solid acceptor comprising a mixture of magnesium and aluminium oxides, at a temperature from 540 to 760°C to react and retain surface oxides on the acceptor, and (b) subsequently removing retained sulfur oxides from the acceptor, by reduction, characterized in that the acceptor is a lithium-doped mixture of magnesium and aluminium oxides, and in that the retained sulfur oxides are reduced by contacting the acceptor with hydrogen at a temperature of 730°C or above.

2. A process according to claim 1 characterized in that the acceptor comprises from 0.5 to 1.0 wt.% lithium and the weight ratio of magnesium oxide to aluminium oxide is from 0.15:1.0 to 0.25:1.0.

3. A process according to claim 1 or 2 characterized in that the acceptor is in the form of spheres or extrudates packed in a fixed bed.

4. A process according to claim 3 characterized in that the fixed bed is divided into at least two portions, each portion being in an isolated contacting zone, the use of each zone cycling between the acceptance of sulfur oxides of step (a) and the removal of sulfur oxides of step (b).

**Patentansprüche**

1. Verfahren zur Entfernung von Schwefeloxiden aus einem Gas, indem man (a) das Gas mit einem festen Akzeptor bestehend aus einem Gemisch von Magnesium- und Aluminiumoxid bei einer Temperator von 540 bis 760°C in Berührung bringt, um Schwefeloxide auf dem Akzeptor umzusetzen und auf diesem zurückzuhalten, und (b) hierauf die zurückgehaltenen Schwefeloxide vom Akzeptor durch Reduktion entfernt, dadurch gekennzeichnet, daß der Akzeptor ein mit Lithium dotieretes Gemisch von Magnesium- und Aluminiumoxid ist und daß die zurückgehaltenen Schwefeloxide reduziert werden, indem man den Akzeptor mit Wasserstoff bei einer Temperatur von 730°C oder höher in Berührung bringt.

2. Verfahren nach Anspruch 1, dadurch gekennzeichnet, daß der Akzeptor 0,5 bis 1,0 Gew.-% Lithium enthält und das Gewichtsverhältnis von Magnesiumoxid zu Aluminiumoxid 0,15:1,0 bis 0,25:1,0 beträgt.

3. Verfahren nach Anspruch 1 oder 2, dadurch gekennzeichnet, daß der Akzeptor in Form von in einem Festbett gepackten Kugeln oder Extrudaten vorliegt.

4. Verfahren nach Anspruch 3, dadurch gekennzeichnet, daß das Festbett in wenigstens zwei Teile geteilt ist, von denen sich jeder in einer isolierten Kontaktzone befindet, wobei die Verwendung einer jeden Zone zwischen der Stufe (a) der Aufnahme der Schwefeloxide und der Stufe (b) der Entfernung der Schwefeloxid wechselt.

**Revendications**

1. Procédé d'élimination des oxydes de soufre d'un gaz par (a) mise en contact du gaz avec un accepteur solide renfermant un mélange d'oxydes de magnésium et d'aluminium, à une température de 540 à 760°C pour faire réagir et retenir les oxydes de soufre sur l'accepteur, et (b) ensuite élimination par réduction hors de l'accepteur des oxydes de soufre retenus, caractérisé en ce que l'accepteur est un mélange d'oxydes de magnésium et d'aluminium dopé au lithium, et en ce que les oxydes de soufre retenus sont réduits par contact de l'accepteur avec de l'hydrogène à une température d'au moins 730°C.

2. Procédé selon la revendication 1, caractérisé en ce que l'accepteur renferme de 0,5 à 1,0% en poids de lithium et que le rapport pondéral de l'oxyde de magnésium à l'oxyde d'aluminium se situe entre 0,15:1,0 et 0,25:1,0.

3. Procédé selon la revendication 1 ou 2 caractérisé en ce que l'accepteur est sous forme de billes ou extrudats rassemblés en un lit fixe.

4. Procédé selon la revendication 3 caractérisé en ce que le lit fixe est divisé en au moins deux compartiments, chaque compartiment se trouvant dans une zone de contact isolée, l'utilisation de chaque zone formant un cycle entre l'acceptation des oxydes de soufre de l'étape (a) et l'élimination des oxydes de soufre de l'étape (b).